# FASCICULE DE BREVET EUROPEEN

(11) **EP 1 290 405 B1**
(45) Date de publication et mention de la délivrance du brevet: **11.01.2006**
(21) Numéro de dépôt: 01943585.8
(22) Date de dépôt: 08.06.2001
(51) Int. Cl.: G01B 7/34, G01B 11/30, G01B 21/30

(54) **PROCEDE ET DISPOSITIF D'EVALUATION DE L'ETAT DE SURFACE D'UN MATERIAU**
VERFAHREN UND VORRICHTUNG ZUR BESTIMMUNG DES OBERFLÄCHENZUSTANDES EINES MATERIALS
METHOD AND DEVICE FOR ASSESSING THE SURFACE CONDITION OF A MATERIAL

(30) Priorité: 09.06.2000 FR 0007490
(43) Date de publication de la demande: 12.03.2003
(73) Titulaire: Universite de Haute Alsace (Etablissement Public a Caractere Scientifique, Culturel et Professionnel), 68100 Mulhouse (FR)
(72) Inventeur: BUENO-BIGUE, Marie-Ange, F-68200 Mulhouse (FR); FONTAINE, Stéphane, F-68200 Mulhouse (FR); RENNER, Marc, F-68200 Mulhouse (FR)
(74) Mandataire: Nithardt, Roland
(86) Numéro de dépôt international: PCT/FR2001/001770
(87) Numéro de publication internationale: WO 2001/094878

(56) Documents cités:
- US-A- 4 665 739
- US-A- 4 748 672
- US-A- 4 776 212
- US-A- 5 047 633
- US-A- 5 436 448
- US-A- 5 519 212
- US-A- 5 672 929
- US-A- 5 681 987
- US-A- 5 801 381
- US-A- 5 965 881
- PATENT ABSTRACTS OF JAPAN vol. 1999, no. 01, 29 janvier 1999 (1999-01-29) & JP 10 269868 A (SUMITOMO WIRING SYST LTD), 9 octobre 1998 (1998-10-09)
- PATENT ABSTRACTS OF JAPAN vol. 009, no. 299 (P-408), 27 novembre 1985 (1985-11-27) & JP 60 135810 A (YAAMAN KK), 19 juillet 1985 (1985-07-19)

## Description

La présente invention concerne un dispositif d'évaluation de l'état de surface d'un matériau et un procédé de mise en oeuvre dudit dispositif d'évaluation, notamment en vue de caractériser la douceur au toucher du matériau.

Il est important dans certains domaines de déterminer l'état de surface d'un matériau ou les modifications d'un tel état de surface. Cet état est fonction du matériau considéré : matériaux fibreux, textile, peau humaine ou animale, cheveux ou poils d'origine humaine ou animale, papier pour l'écriture, l'impression, l'essuyage, l'hygiène ou l'emballage, métaux, matériaux d'origines végétale, animale ou minérale, bois, matières plastiques. Par exemple, dans le domaine du textile, un traitement d'un tissu peut faire ressortir des microfibrilles, d'où une augmentation de la douceur du tissu. Il est utile, dans certains cas, de quantifier la modification de l'état de surface du matériau pour déterminer une mesure de douceur au toucher. A titre d'exemple, cette mesure de la douceur au toucher peut être utilisée par les fabricants de lessives, détergents et produits d'entretien pour tester les qualités de leurs produits tout comme dans le domaine des cosmétiques.

Il existe jusqu'à présent un premier type d'appareillages qui mesure la topographie de la surface à analyser, par exemple par méthode optique, mécanique ou par imagerie. Le profil de la surface est ensuite étudié selon plusieurs techniques:
■ Les méthodes statistiques : dans ce cas, le profil est considéré comme une population d'éléments définis par deux ou trois coordonnées. L'analyse concerne d'une part la hauteur des aspérités (moyenne, déviation par rapport à la moyenne, écart-type, obliquité, finesse, etc.) et d'autre part leur répartition sur la surface (distance moyenne entre deux aspérités, etc.)
■ Les méthodes usuelles : utilisées dans le traitement du signal, telles que l'analyse fréquentielle, l'analyse temporelle, l'analyse temps-fréquence, etc.
■ Les méthodes chaotiques : telles que l'analyse fractale.

Il existe un second type d'appareillages qui mesure directement le comportement au frottement d'une surface au moyen d'un palpeur mécanique. Dans ce cas, le signal mesuré est étudié en régime transitoire ou permanent par les méthodes usuelles du traitement du signal, les méthodes statistiques ou chaotiques citées ci-dessus. Un exemple d'application est décrit dans la publication JP-A-60 135 810 pour déterminer la rugosité de la peau au moyen d'un palpeur rigide monté pivotant dans un support.

Ces différentes méthodes d'investigation ont chacune des inconvénients. En effet, les méthodes statistiques utilisées dans la mesure d'une topographie ou du frottement sont insuffisamment sensibles pour certaines applications car l'information est prise dans son ensemble et les différences importantes d'état de surface peuvent être noyées dans le signal rendant l'analyse peu discriminante. De plus, il est nécessaire de déterminer le paramètre le plus sensible pour la surface à analyser, d'où une certaine difficulté à extraire un paramètre unique et universel.

Quant aux méthodes usuelles du traitement du signal, elles peuvent être très précises dans le cas de surfaces périodiques mais sont peu adaptées aux surfaces non périodiques. D'autre part, il s'agit de méthodes comparatives et en aucun cas absolues.

Enfin, les méthodes chaotiques, en particulier le calcul de la dimension fractale, ont les mêmes inconvénients que l'analyse statistique car elles considèrent l'ensemble de l'information donnée par la mesure.

De nombreuses applications utilisant ces méthodes sont connues. Cependant, ces applications ne se basent pas sur une véritable analyse de l'élément vibrant au contact de la surface.

C'est notamment le cas du dispositif décrit dans la publication JP-A-10 269 868, qui permet de mesurer la rugosité d'un câble électrique déplacé sous une lame flexible. Ce dispositif ne permet de mesurer que la déflection de la lame flexible.

C'est le cas également du dispositif décrit dans la publication US-A-5 672 929, qui permet de détecter les vibrations générées par le déplacement d'un support tel qu'une feuille de papier. Les vibrations sont alors analysées pour caractériser le contact et le mouvement, mais pas l'état de surface du support.

La présente invention vise à pallier ces inconvénients en proposant un dispositif d'évaluation et son procédé de mise en oeuvre qui permettent d'analyser une surface présentant ou non une périodicité de son état de surface, de la caractériser par un paramètre et de comparer des surfaces totalement différentes par leur structure, leur texture, le ou les matériaux les composant et les éventuels traitements de surface subis.

Dans ce but, l'invention concerne un dispositif d'évaluation de l'état de surface d'un matériau, comprenant un support sur lequel est monté au moins un élément vibrant ayant une dimension négligeable par rapport aux deux autres de manière à être flexible et pouvoir entrer en vibration selon ses modes propres lors d'un mouvement relatif par rapport audit matériau de manière à faire frotter ledit élément vibrant sur la surface du matériau, des moyens de mesure des modes propres de vibration de l'élément vibrant agencés pour fournir un signal correspondant aux-dits modes propres de vibration, un dispositif de traitement et d'analyse du signal agencé pour faire correspondre à ce signal au moins une donnée caractérisant un état de surface ainsi qu'une interface agencée pour indiquer la ou lesdites données.

D'une manière particulièrement avantageuse, le dispositif d'évaluation peut comprendre un second dispositif de traitement agencé pour transformer, par rapport à une échelle prédéfinie, ladite donnée caractérisant l'état de surface en une valeur quantifiant la douceur au toucher du matériau.

Le matériau peut être choisi parmi le groupe comprenant au moins les matériaux de type métallique, organique, minéral, d'origine naturelle, artificielle, synthétique ou les compositions de plusieurs de ces matériaux. Le matériau peut être notamment un système vivant, tel que la peau ou les cheveux.

L'élément vibrant peut être réalisé dans une matière choisie parmi le groupe comprenant au moins les matières de type métallique, organique ou minérale, d'origine naturelle, artificielle ou synthétique, ou les compositions de plusieurs de ces matières. Cet élément vibrant est de préférence constitué d'une lamelle.

Les moyens de mesure des modes propres de vibration de l'élément vibrant peuvent être des capteurs permettant de mesurer au moins une grandeur physique liée à l'élément vibrant, telles que des grandeurs cinématiques (déplacements, vitesses, accélérations), ou telles que des grandeurs dynamiques liées à l'élément vibrant (forces, moments), ou au matériau (contraintes, déformations, vitesses de déformation). Les capteurs peuvent également mesurer au moins une grandeur liée à l'environnement correspondant (grandeurs acoustiques et thermiques). Le ou les capteurs sont fondés sur une technologie choisie parmi le groupe comprenant au moins les technologies mécanique, acoustique, électrique, électrostatique, électromagnétique, électronique, optique, optoélectronique, chimique, thermique, radioactive ou une composition de ces technologies, utilisant comme média un fluide dont l'état est choisi parmi le groupe comprenant au moins l'état visqueux, liquide ou gazeux.

D'une manière avantageuse, le dispositif de traitement et d'analyse du signal est agencé pour effectuer une analyse du signal à l'aide d'une méthode choisie dans le groupe comprenant au moins les méthodes mathématiques, les méthodes physiques. La méthode d'analyse est de préférence une méthode physique agencée pour effectuer une transformée du signal choisie dans le groupe comprenant au moins la transformée de Fourier, la transformée temps-fréquence, la transformée par ondelettes. Toute autre méthode mathématique ou physique d'analyse d'un signal analogique, discret, quantifié ou numérique peut être également utilisée.

L'élément vibrant est fixé au support par encastrement à l'une de ses extrémités.

D'une manière particulièrement avantageuse, le dispositif d'évaluation selon l'invention comprend un boîtier de protection de l'élément vibrant et de son support, ledit boîtier comportant au moins une ouverture, permettant le passage d'une partie de l'élément vibrant. Les moyens de mesure des modes propres de vibration, le dispositif de traitement et d'analyse et l'interface peuvent être disposés partiellement ou en totalité dans ledit boîtier.

L'invention concerne également un procédé de mise en oeuvre du dispositif d'évaluation décrit ci-dessus, dans lequel on met au moins ledit dispositif d'évaluation ou ledit matériau en mouvement relatif par rapport l'autre de manière à faire frotter l'élément vibrant sur la surface dudit matériau pour qu'il entre en vibration selon ses modes propres, on mesure les modes propres de vibration de l'élément vibrant par l'intermédiaire desdits moyens de mesure, on traite et on analyse le signal obtenu au moyen du dispositif de traitement et d'analyse de manière à obtenir au moins la donnée caractérisant l'état de surface du matériau.

D'une manière particulièrement avantageuse, on peut transformer, par rapport à une échelle prédéfinie, ladite donnée caractérisant l'état de surface du matériau en au moins une valeur quantifiant la douceur au toucher du matériau.

La présente invention et ses avantages apparaîtront mieux dans la description suivante de plusieurs exemples de réalisation, en référence aux dessins annexés, dans lesquels:
- les figures 1 à 3 représentent schématiquement trois modes de réalisation et d'utilisation du dispositif d'évaluation selon l'invention,
- les figures 4 et 5 représentent un état de surface d'un matériau respectivement avant et après traitement,
- la figure 6 est une représentation des spectres obtenus après application du procédé selon l'invention à l'aide du dispositif d'évaluation de la figure 2, et
- la figure 7 représente une variante de réalisation du dispositif d'évaluation selon l'invention.

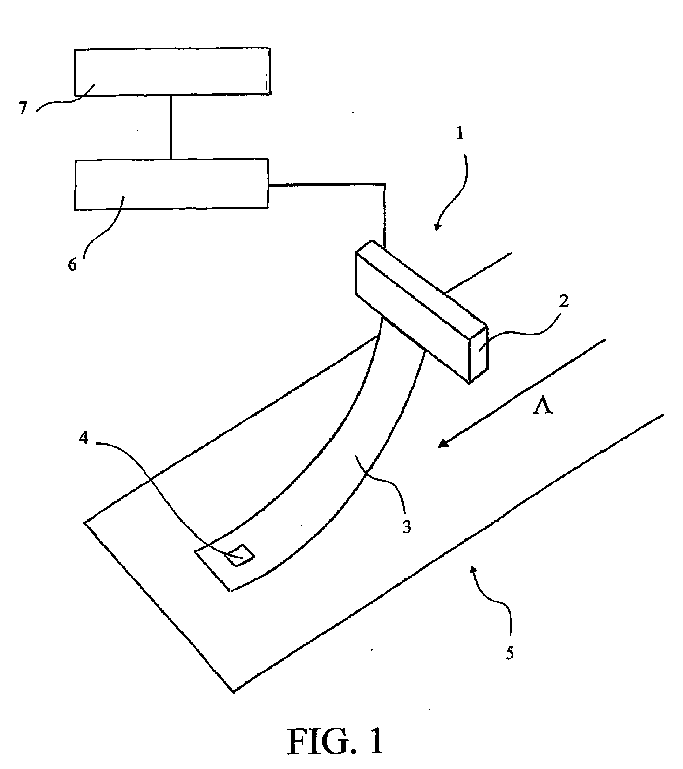

En référence à la figure 1, le dispositif d'évaluation 1 selon l'invention est utilisé pour mesurer l'état de surface d'une matière textile 5 défilant de façon rectiligne dans le sens de production indiqué par la flèche A. Le dispositif d'évaluation 1 comprend un support 2 dans lequel est encastrée une extrémité d'un élément vibrant constitué d'une lamelle 3 rectangulaire en acier de très faible épaisseur. Sur ladite lamelle 3 est collée une jauge extensométrique 4 qui constitue le moyen de mesure des modes propres de vibration de la lamelle 3 et qui émet un signal correspondant aux modes propres de vibration de la lamelle 3.

Le dispositif d'évaluation 1 est également pourvu d'un analyseur de spectres 6 relié à la jauge 4 et constituant un dispositif de traitement et d'analyse du signal fourni par ladite jauge 4. L'analyse du signal permet d'isoler les fréquences et les amplitudes dans chacun des modes propres de vibration, chaque mode de vibration pouvant donner des informations différentes et évoluer différemment suivant l'énergie dont la lamelle 3 a besoin pour vibrer dans le mode considéré. L'analyseur de spectres 6 est par exemple agencé de sorte que, via un pont d'équilibrage de type Wheatstone et un traitement du signal par exemple par transformée de Fourier, on obtient la densité spectrale de puissance en fonction de la fréquence de vibration de la lamelle 3. Le spectre obtenu peut être visualisé directement sur une interface 7. L'amplitude et l'énergie de vibration représentées sur le spectre permettent alors d'obtenir une donnée caractérisant l'état de surface de la matière textile 5. Le traitement du signal peut également être réalisé par transformée temps-fréquence et/ou par transformée par ondelettes.

Le dispositif d'évaluation 1 peut également comporter un second dispositif de traitement qui transforme les données obtenues par le biais du spectre en une valeur déterminée par rapport à une échelle prédéfinie en fonction de l'élément vibrant ou des moyens de mesure des vibrations, et suivant l'état de toute la surface analysée. Ladite valeur obtenue permet de quantifier la douceur au toucher de la matière textile 5 en fonction de certains critères prédéfinis.

Le dispositif d'évaluation 1 est mis en oeuvre selon le procédé suivant permettant de faire des mesures en ligne : le support 2 est monté fixe, par exemple sur une émeriseuse, au-dessus de la matière textile 5 défilant selon la direction A. Il est placé à une distance de la matière textile 5 défilant telle que l'extrémité libre de la lamelle 3 frotte sur ladite matière textile 5 avec une légère flexion de ladite lamelle 3. Du fait de l'interaction textile-lamelle, cette dernière entre en vibration dans ses modes propres. La jauge extensométrique 4 mesure alors les déformations relatives à l'état dynamique de la vibration de la lamelle 3 et transmet le signal correspondant à l'analyseur de spectres 6. Le traitement du signal permet de visualiser les modes propres de vibration de la lamelle 3 par des pics de densité spectrale de puissance aux fréquences correspondant à ces modes. L'amplitude de ces pics est mesurée en V²/Hz et toute variation d'amplitude signifie une modification de l'état de la surface analysée.

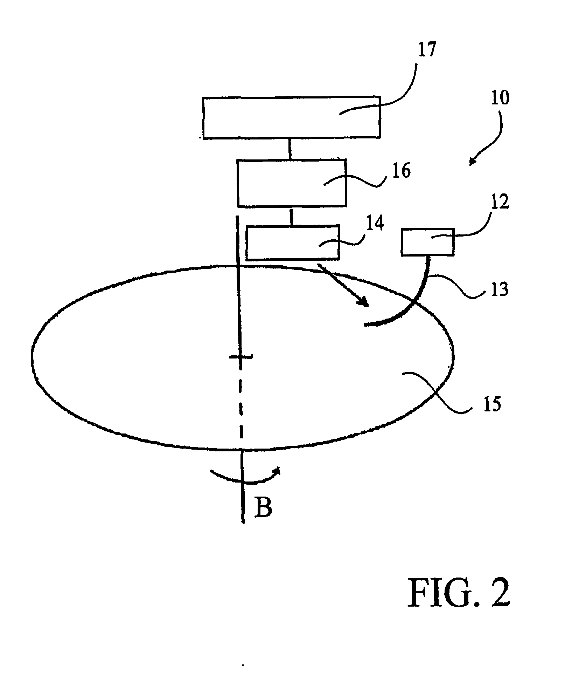

En référence à la figure 2, le dispositif dévaluation 10 selon l'invention est utilisé pour mesurer l'état de surface d'un échantillon de matière textile 15 fixé sur un plateau tournant et défilant de façon circulaire selon la flèche B, dans le but de réaliser des mesures en laboratoire. Le dispositif d'évaluation 10 comprend un support 12 dans lequel est encastrée une extrémité d'un élément vibrant constitué d'une lamelle 13 rectangulaire en polychlorure de vinyle de très faible épaisseur. Dans cette variante, le moyen de mesure des modes propres de vibration est un microphone 14 relié à un analyseur de spectres 16 relié lui-même à une interface 17.

L'analyseur de spectres 16 est choisi dans le même but que l'analyseur de spectres 6 à savoir transformer le signal émis par le microphone 14 en densité spectrale de puissance en fonction de la fréquence, le résultat étant visualisé sur l'interface 17.

Là encore, il est possible de prévoir, dans le dispositif d'évaluation 10, un second dispositif de traitement qui transforme les données obtenues par le biais du spectre en une valeur déterminée par rapport à une échelle prédéfinie en fonction de l'élément vibrant ou des moyens de mesure des modes propres de vibration, et suivant l'état de toute la surface analysée. Ladite valeur obtenue permet de quantifier la douceur au toucher de l'échantillon de matière textile 15 en fonction de certains critères prédéfinis.

Le dispositif d'évaluation 10 est mis en oeuvre selon le procédé suivant permettant de faire des mesures en laboratoire : le support 12 est monté fixe, au-dessus de la matière textile 15 défilant selon le sens B. Il est placé à une distance de la matière textile 15 défilant telle que l'extrémité libre de la lamelle 13 frotte sur ladite matière textile 15 avec une légère flexion de ladite lamelle 13. Du fait de l'interaction textile-lamelle, cette dernière entre en vibrations dans ses modes propres. On amène alors, dans une atmosphère silencieuse, le microphone 14, à quelques millimètres de la zone de frottement lamelle-textile. Le microphone 14 capte par voie acoustique les déplacements dus à la vibration de la lamelle 13 et transmet un signal correspondant à l'analyseur de spectres 16. Via par exemple une transformée de Fourier, le traitement du signal permet d'obtenir la densité spectrale de puissance en fonction de la fréquence et de visualiser ainsi les modes propres de vibration de la lamelle par des pics de densité spectrale de puissance aux fréquences correspondant à ces modes. L'amplitude de ces pics est mesurée en Pa²/Hz et toute variation d'amplitude signifie une modification de l'état de la surface analysée. Dans ce cas aussi, on peut utiliser une autre transformée telle que temps-fréquence ou par ondelettes pour traiter le signal.

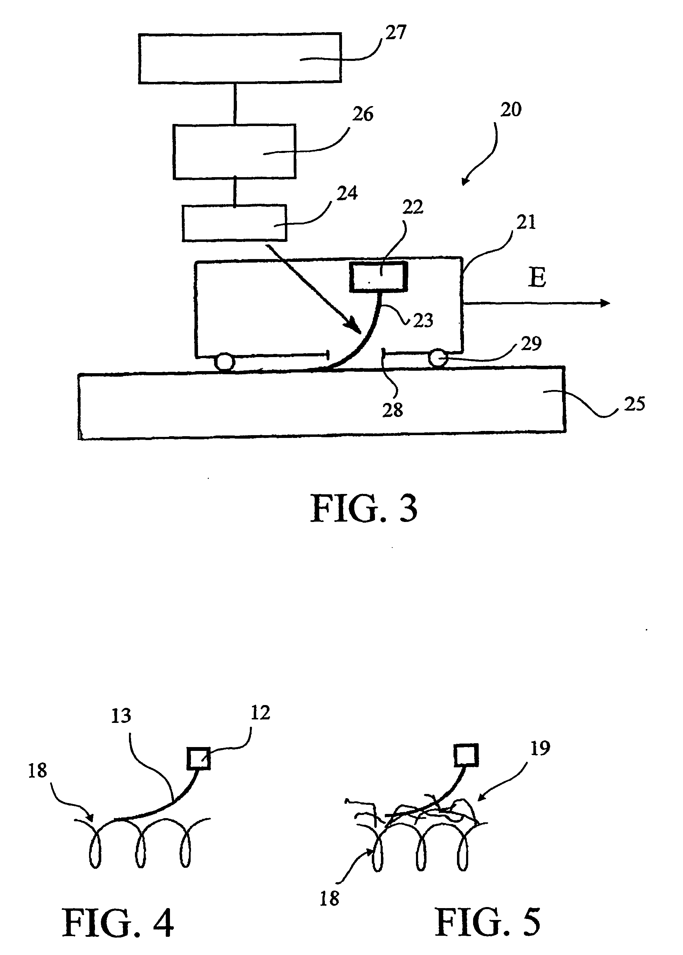

Pour illustrer ce procédé de mise en oeuvre, il est représenté sur la figure 4 un tricot 18 avant grattage et sur la figure 5 ce même tricot 18 passé dans une gratteuse. Cette machine est équipée de griffes métalliques sous lesquelles passe le tricot 18 et qui fait ressortir du tricot de nombreuses fibres émergentes constituant une pilosité superficielle 19. Le tricot gratté présente alors un toucher très doux.

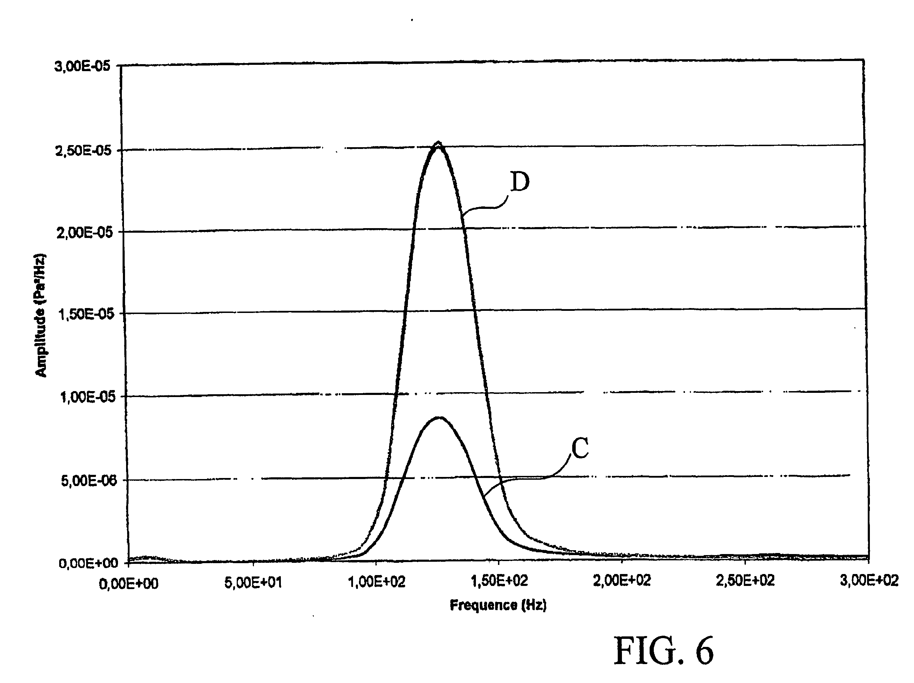

En référence à la figure 6, lorsque la lamelle 13 frotte sur le tricot 18 non gratté, on obtient par l'intermédiaire de l'analyseur de spectres 16 une courbe C de densité spectrale de puissance en fonction de la fréquence qui présente un pic d'amplitude inférieure à 1,00E-05 Pa²/Hz.

Lorsque la lamelle 13 frotte sur le tricot 18 gratté, la présence de cette abondante pilosité superficielle 19 provoque une plus grande excitation mécanique et donc amplifie fortement la réaction de la lamelle 13. On obtient en effet une courbe D de densité spectrale de puissance en fonction de la fréquence qui présente, à la même fréquence, un pic d'amplitude égale à 2,50E-05 Pa²/Hz.

Cette variation significative de l'amplitude des pics est bien le témoin d'une modification de l'état de surface analysée, à savoir ici, une augmentation de la douceur au toucher.

En référence à la figure 3, le dispositif d'évaluation 20 selon l'invention est un appareil portatif utilisé pour mesurer l'état dune surface 25, fixe ou en mouvement relatif par rapport au dispositif 20. Le dispositif d'évaluation 20 comprend un support 22 dans lequel est encastrée une extrémité d'un élément vibrant constitué d'une lamelle 23 rectangulaire en acier de très faible épaisseur. Dans cette variante, le moyen de mesure des modes propres de vibration est une jauge piézo-électrique 24 collée sur la lamelle 23 et reliée à un analyseur de spectres 26 relié lui-même à une interface 27.

L'analyseur de spectres 26 est choisi dans le même but que les analyseurs de spectres 6 et 16, à savoir transformer le signal émis par la jauge piézo-électrique ou piézo-résistive 24 en densité spectrale de puissance en fonction de la fréquence, le résultat étant visualisé sur l'interface 27.

Là encore, il est possible de prévoir, dans le dispositif d'évaluation 20, un second dispositif de traitement qui transforme les données obtenues par le biais du spectre en une valeur déterminée par rapport à une échelle prédéfinie en fonction de l'élément vibrant ou des moyens de mesure des modes propres de vibration, et suivant l'état de toute la surface analysée.

Le dispositif d'évaluation 20 comporte également un boîtier 21 renfermant le support 22, la lamelle 23, la jauge 24, l'analyseur de spectres 26 et l'interface 27 de manière à obtenir un dispositif compact. Le boîtier 21 comporte dans son fond une ouverture 28 permettant le passage de l'extrémité libre de la lamelle 23. Il est également prévu des moyens de roulement 29 agencés pour pouvoir déplacer le dispositif dévaluation 20 facilement sur la surface à analyser 25.

Le dispositif d'évaluation 20 est mis en oeuvre selon le procédé suivant : l'opérateur fait défiler le boîtier 21 sur la surface à analyser 25 dans la direction indiquée par la flèche E. Le support 22 est monté fixe dans le boîtier 21 à une hauteur telle que l'extrémité libre de la lamelle 23 dépassant de l'ouverture 28 frotte sur la surface à analyser 25 avec une légère flexion de ladite lamelle 23. Du fait de l'interaction textile-lamelle, cette dernière entre en vibration dans ses modes propres. La jauge piézo-électrique 24 mesure les variations de contrainte relatives à l'état dynamique de la vibration de la lamelle 23 et transmet un signal correspondant à l'analyseur de spectres 26. Via par exemple une transformée de Fourier, le traitement du signal permet d'obtenir la densité spectrale de puissance en fonction de la fréquence et de visualiser ainsi les modes propres de vibration de la lamelle par des pics de densité spectrale de puissance aux fréquences correspondant à ces modes. L'amplitude de ces pics est mesurée en V²/Hz et toute variation d'amplitude signifie une modification de l'état de la surface analysée. De même, d'autres transformées telles que la transformée temps-fréquence ou par ondelettes peuvent être utilisées pour traiter le signal.

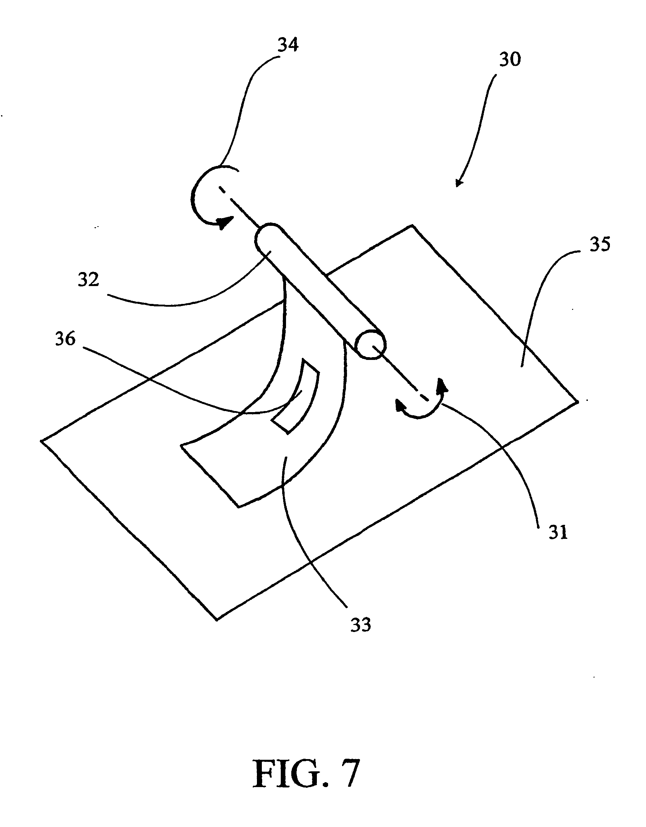

En référence à la figure 7, le dispositif d'évaluation 30 selon l'invention par exemple portatif se présente sous forme d'un boîtier (non représenté) et est utilisé pour mesurer l'état de surface d'un échantillon 35 fixe ou en mouvement relatif par rapport au dispositif 30. Le dispositif d'évaluation 30 comprend un support 32 dans lequel est encastrée une extrémité d'un élément vibrant constitué d'une lamelle 33 rectangulaire en acier de très faible épaisseur. Le support 32 se présente par exemple sous la forme d'une barre cylindrique. Ce support 32 est mobile en rotation et peut avoir des mouvements rotatifs continus illustrés par la flèche 34, ou alternatifs illustrés par la flèche 31. Dans cette variante, le moyen de mesure des vibrations est une jauge piézo-électrique ou piézo-résistive 36 collée sur la lamelle 33 et reliée à un analyseur de spectres (non représenté) relié lui-même à une interface (non représentée).

Ainsi, les dispositifs d'évaluation selon l'invention et leur procédé de mise en oeuvre permettent d'analyser les modes propres de vibration d'un élément vibrant en mouvement relatif par rapport à une surface à analyser, quels que soient ses formes et matériaux, et d'obtenir, par cette mesure indirecte, une caractérisation de l'état de diverses surfaces quelles que soient leur structure (périodique ou non), leur composition, et leur méthode d'obtention. Ces avantages ne peuvent pas être obtenus avec les méthodes de mesures actuelles qui analysent directement la réaction de la surface à une sollicitation quelconque, par exemple mécanique, optique ou électromagnétique.

La présente invention peut être utilisée dans tous les domaines où il est nécessaire de connaître un état de surface et notamment d'évaluer la douceur au toucher, tels que les domaines du textile, de la cosmétique, de l'industrie automobile, des détergents, des produits d'entretien, et de la réalisation d'objets divers. Il peut également être utilisé pour évaluer la douceur au toucher des systèmes vivants, tels que la peau ou les cheveux en fonction de l'application de produits cosmétiques, le dispositif d'évaluation pouvant s'utiliser alors in vivo.

En particulier, on peut prévoir dans un même dispositif d'évaluation plusieurs éléments vibrants. Ce ou ces éléments vibrants peuvent présenter de nombreuses formes différentes.
La forme de l'élément vibrant a une dimension négligeable devant les deux autres, par exemple une plaque, une lamelle, de toute section, de toute forme, creuse, évidée
ou pleine, ou un assemblage de plusieurs de ces éléments vibrants.

La forme de l'élément vibrant peut être un assemblage de différentes formes ayant chacune aucune, une dimension négligeable par rapport aux autres.

L'élément vibrant peut être réalisé dans d'autres matières que celles décrites ci-dessus, à savoir dans une matière de type métallique, organique ou minérale, d'origine naturelle, artificielle ou synthétique, ou encore une composition de plusieurs de ces matières.

L'élément vibrant peut être fixé par encastrement d'une de ses extrémités dans son support.

Les moyens de mesure des modes propres de vibration de l'élément vibrant peuvent être des capteurs permettant de mesurer :
■ des grandeurs cinématiques telles que déplacements, vitesses, accélérations,
■ des grandeurs dynamiques liées à l'élément vibrant telles que forces, moments, ou au matériau telles que contraintes, déformations, vitesses de déformation,
■ des grandeurs liées à l'environnement correspondant telles que grandeurs acoustiques, thermiques et radioactives.

Pour le traitement du signal, on peut utiliser toute méthode mathématique ou physique d'analyse d'un signal analogique, discret, quantifié ou numérique.

La présente invention n'est pas limitée aux exemples de réalisation décrits mais s'étend à toute modification et variante évidentes pour un homme du métier, tout en restant dans l'étendue de la protection définie dans les revendications annexées.

## Revendications

1. Dispositif d'évaluation (1, 10, 20, 30) de l'état de surface d'un matériau (5, 15, 25, 35), comprenant un support (2, 12, 22, 32) sur lequel est monté au moins un élément vibrant (3, 13, 23, 33) ayant une dimension négligeable par rapport aux deux autres de manière à être flexible et pouvoir entrer en vibration selon ses modes propres lors d'un mouvement relatif par rapport audit matériau (5, 15, 25, 35) de manière à faire frotter ledit élément vibrant (3, 13, 23, 33) sur la surface dudit matériau (5, 15, 25, 35), des moyens de mesure (4, 14, 24, 36) des modes propres de vibration dudit élément vibrant (3, 13, 23, 33) agencés pour fournir un signal correspondant aux-dits modes propres de vibration, un dispositif de traitement et d'analyse (6, 16, 26) dudit signal agencé pour faire correspondre audit signal au moins une donnée caractérisant un état de surface, et une interface (7, 17, 27) agencée pour indiquer ladite donnée.

2. Dispositif d'évaluation selon la revendication 1, comprenant un second dispositif de traitement agencé pour transformer, par rapport à une échelle prédéfinie, ladite donnée caractérisant ledit état de surface en une valeur quantifiant la douceur au toucher dudit matériau (5, 15, 25, 35), en fonction d'au moins un critère prédéfini.

3. Dispositif d'évaluation selon la revendication 1, dans lequel ledit matériau (5, 15, 25, 35) est choisi parmi le groupe comprenant au moins les matériaux de type métallique, organique, minéral, d'origine naturelle, artificielle, synthétique et les compositions de plusieurs de ces matériaux.

4. Dispositif d'évaluation selon la revendication 1, dans lequel l'élément vibrant (3, 13, 23, 33) est réalisé dans une matière choisie parmi le groupe comprenant au moins les matières de type métallique, organique, minérale, d'origine naturelle, artificielle, synthétique et les compositions de plusieurs de ces matières.

5. Dispositif d'évaluation selon la revendication 1, dans lequel ledit élément vibrant (3, 13, 23, 33) est constitué d'au moins une lamelle.

6. Dispositif d'évaluation selon la revendication 1, dans lequel lesdits moyens de mesure (4, 24, 36) des modes propres de vibration de l'élément vibrant (3, 23, 33) sont des capteurs permettant de mesurer au moins une grandeur physique liée audit élément vibrant (3, 23, 33).

7. Dispositif d'évaluation selon la revendication 6, dans lequel ledit capteur est une jauge extensométrique (4), piézo-électrique ou piézo-résistive (24, 36), qui est collée sur ledit élément vibrant (3, 23, 33).

8. Dispositif d'évaluation selon la revendication 1, dans lequel lesdits moyens de mesure (14) des modes propres de vibration dudit élément vibrant (13) sont des capteurs permettant de mesurer au moins une grandeur liée à l'environnement correspondant.

9. Dispositif d'évaluation selon les revendications 1, 6 ou 8, dans lequel lesdits moyens de mesure (4, 14, 24, 36) des modes propres de vibration dudit élément vibrant (3, 13, 23, 33) sont fondés sur une technologie choisie parmi le groupe comprenant au moins les technologies mécanique, acoustique, électrique, électrostatique, électromagnétique, électronique, optique, optoélectronique, chimique, thermique, radioactive, une composition de ces technologies, utilisant comme média un fluide dont l'état est choisi parmi le groupe comprenant au moins l'état visqueux, liquide, gazeux.

10. Dispositif d'évaluation selon la revendication 1, dans lequel ledit dispositif de traitement et d'analyse (6, 16, 26) dudit signal est agencé pour effectuer une analyse dudit signal à l'aide d'une méthode choisie parmi le groupe comprenant au moins les méthodes mathématiques, les méthodes physiques.

11. Dispositif d'évaluation selon la revendication 10, dans lequel ladite méthode d'analyse est une méthode physique agencée pour effectuer une transformée dudit signal choisie dans le groupe comprenant au moins la transformée de Fourier, la transformée temps-fréquence, la transformée par ondelettes.

12. Dispositif d'évaluation selon la revendication 1, dans lequel ledit élément vibrant (3, 13, 23, 33) est fixé audit support (2, 12, 22, 32) par encastrement à l'une de ses extrémités.

13. Dispositif d'évaluation selon l'une quelconque des revendications précédentes, comprenant un boîtier (21) de protection dudit élément vibrant (23) et dudit support (22), ledit boîtier (21) comportant au moins une ouverture (28) permettant le passage d'une partie dudit élément vibrant (23).

14. Dispositif d'évaluation selon la revendication 13, dans lequel lesdits moyens de mesure (24) desdits modes propres de vibration, ledit dispositif de traitement et d'analyse (26) et ladite interface (27) sont disposés partiellement ou en totalité dans ledit boîtier (21).

15. Procédé de mise en oeuvre du dispositif d'évaluation selon l'une quelconque des revendications précédentes, dans lequel l'on met au moins ledit dispositif d'évaluation (1, 10, 20, 30) ou ledit matériau (5, 15, 25, 35) en mouvement relatif par rapport à l'autre de manière à faire frotter ledit élément vibrant (3, 13, 23, 33) sur la surface dudit matériau (5, 15, 25, 35) pour qu'il entre en vibration selon ses modes propres, on mesure les modes propres de vibration dudit élément vibrant par l'intermédiaire desdits moyens de mesure (4, 14, 24, 36), on traite et analyse ledit signal obtenu au moyen dudit dispositif de traitement et d'analyse (6, 16, 26) de manière à obtenir au moins ladite donnée caractérisant l'état de surface dudit matériau (5, 15, 25, 35).

16. Procédé selon la revendication 15, comprenant l'étape que l'on transforme, par rapport à une échelle prédéfinie, ladite donnée caractérisant l'état de surface dudit matériau (5, 15, 25, 35) en au moins une valeur quantifiant la douceur au toucher dudit matériau (5, 15, 25, 35) selon au moins un critère prédéfini.

## Patentansprüche

1. Bewertungsvorrichtung (1,10,20,30) für den Oberflächenzustand eines Werkstoffes (5,15,25,35), die einen Träger (2,12,22,32), auf dem mindestens ein Vibrationselement (3,13,23,33) angebracht ist, welches eine im Verhältnis zu den zwei weiteren eine vernachlässigbare Abmessung aufweist, so dass es flexibel und in der Lage ist, bei einer relativen Bewegung im Verhältnis zu dem Werkstoff (5,15,25,35) in seinen eigenen Modi so zu vibrieren, dass das Reiben des Vibrationselementes (3,13,23,33) auf der Oberfläche des Werkstoffes (5,15,25,35) verursacht wird, Messeinrichtungen (4,14,24,36) für die eigenen Vibrationsmodi des Vibrationselementes (3,13,23,33), die dafür vorgesehen sind, ein den eigenen Vibrationsmodi entsprechendes Signal zu liefern, eine Behandlungs- und Analysevorrichtung (6,16,26) des Signals, die dafür vorgesehen ist, zu veranlassen, dass dem Signal mindestens eine den Oberflächenzustand kennzeichnende Dateneinheit entspricht, und eine Schnittstelle (7,17,27) zum Anzeigen der Dateneinheit aufweist.

2. Bewertungsvorrichtung nach Anspruch 1, die eine zweite Behandlungsvorrichtung umfasst, um im Verhältnis zu einem zuvor festgelegten Maßstab die den Oberflächenzustand kennzeichnende Dateneinheit in einen Wert umzuwandeln, der die Berührungsweichheit des Werkstoffes (5,15,25,35) in Abhängigkeit von mindestens einem zuvor festgelegten Kriterium mengenmäßig bestimmt.

3. Bewertungsvorrichtung nach Anspruch 1, bei welcher der Werkstoff (5,15,25,35) aus einer mindestens die Werkstoffe metallischer, organischer, mineralischer, natürlicher Herkunft, künstlicher, synthetischer Art und die Zusammensetzungen mehrerer dieser Werkstoffe umfassenden Gruppe ausgewählt ist.

4. Bewertungsvorrichtung nach Anspruch 1, bei der das Vibrationselement (3,13,23,33) aus einem aus einer die Werkstoffe metallischer, organischer, mineralischer, natürlicher Herkunft, künstlicher, synthetischer Art und die Zusammensetzungen mehrerer dieser Werkstoffe umfassenden Gruppe ausgewählten Werkstoff ausgeführt ist.

5. Bewertungsvorrichtung nach Anspruch 1, bei der das Vibrationselement (3,13,23,33) aus mindestens einer Lamelle besteht.

6. Bewertungsvorrichtung nach Anspruch 1, bei der die Messeinrichtungen (4,24,36) für die eigenen Vibrationsmodi des Vibrationselementes (3,23,33) Messfühler sind, die in der Lage sind, mindestens eine mit dem Vibrationselement (3,23,33) in Zusammenhang stehende physikalische Größe zu messen.

7. Bewertungsvorrichtung nach Anspruch 6, bei der der Messfühler ein Dehnungs- (4), piezoelektrischer oder piezoresistiver (24,36) Messstreifen ist, der auf das Vibrationselement (3,23,33) aufgeklebt ist.

8. Bewertungsvorrichtung nach Anspruch 1, bei der die Messeinrichtungen (14) für die eigenen Vibrationsmodi des Vibrationselementes (13) Messfühler sind, die in der Lage sind, mindestens eine mit der entsprechenden Umgebung in Zusammenhang stehende physikalische Größe zu messen.

9. Bewertungsvorrichtung nach den Ansprüchen 1, 6 oder 8, bei der die Messeinrichtungen (4,14,24,36) für die eigenen Vibrationsmodi des Vibrationselementes (3,13,23,33) auf einer Technologie basieren, die aus der mindestens die mechanische, akustische, elektrische, elektrostatische, elektromagnetische, elektronische, optische, optoelektronische, chemische, thermische, radioaktive, eine Zusammensetzung dieser Technologien umfassenden Gruppe ausgewählt ist, wobei als Medium ein Fluid verwendet wird, dessen Zustand aus der mindestens den zähflüssigen, flüssigen, gasförmigen Zustand umfassenden Gruppe ausgewählt ist.

10. Bewertungsvorrichtung nach Anspruch 1, bei der die Behandlungs- und Analysevorrichtung (6,16,26) des Signals dafür vorgesehen ist, die Analyse des Signals mithilfe eines Verfahrens durchzuführen, welches aus der mindestens die mathematischen Verfahren, die physikalischen Verfahren umfassenden Gruppe ausgewählt ist.

11. Bewertungsvorrichtung nach Anspruch 10, bei der das Analyseverfahren ein physikalisches Verfahren ist, welches in der Lage ist, eine Transformation des Signals durchzuführen, die aus der mindestens die Fourier-Transformation, die Zeit-FrequenzTransformation, die Kleinwellen-Transformation umfassenden Gruppe ausgewählt ist.

12. Bewertungsvorrichtung nach Anspruch 1, bei der das Vibrationselement (3,13,23,33) an dem Träger (2,12,22,32) durch den Einbau eines seiner äußersten Enden befestigt ist.

13. Bewertungsvorrichtung nach einem der vorangegangenen Ansprüche, die ein Gehäuse (21) zum Schutz des Vibrationselementes (23) und des Trägers (22) umfasst, wobei das Gehäuse (21) mindestens eine Öffnung (28) aufweist, die den Durchgang eines Teils des Vibrationselementes (23) ermöglicht.

14. Bewertungsvorrichtung nach Anspruch 13, bei der die Messeinrichtungen (24) der eigenen Vibrationsmodi, die Behandlungs- und Analysevorrichtung (26) und die Schnittstelle (27) teilweise oder ganz in dem Gehäuse (21) angeordnet sind.

15. Verfahren zur Anwendung der Bewertungsvorrichtung nach einem der vorangegangenen Ansprüche, bei dem mindestens die Bewertungsvorrichtung (1,10,20,30) oder der Werkstoff(5,15,25,35) in eine Bewegung im Verhältnis zu dem anderen versetzt werden, so dass das Reiben des Vibrationselementes (3,13,23,33) auf der Oberfläche des Werkstoffes (5,15,25,35) verursacht wird, um zu veranlassen, dass es in seinen eigenen Modi vibriert, bei dem man die eigenen Vibrationsmodi des Vibrationselementes mittels der Messeinrichtungen (4,14,24,36) misst, man das erhaltene Signal mittels der Behandlungs- und Analysevorrichtung (6,16,26) so behandelt und analysiert, dass mindestens eine den Oberflächenzustand des Werkstoffes (5,15,25,35) kennzeichnende Dateneinheit erhalten wird.

16. Verfahren nach Anspruch 15, welches den Schritt umfasst, dass im Verhältnis zu einem zuvor festgelegten Maßstab die den Oberflächenzustand kennzeichnende Dateneinheit in mindestens einen Wert umgewandelt wird, der die Berührungsweichheit des Werkstoffes (5,15,25,35) gemäß mindestens einem zuvor festgelegten Kriterium mengenmäßig bestimmt.

## Claims

1. A device (1, 10, 20, 30) for evaluating the surface condition of a material (5, 15, 25, 35), comprising a support (2, 12, 22, 32) to which at least one vibrating element (3, 13, 23, 33) is attached, which has one dimension that is inconsequential relative to the two others to be flexible and capable to enter into its particular modes of vibration during a movement relative to said material (5, 15, 25, 35) to rub the vibrating element (3, 13, 23, 33) on the surface of said material (5, 15, 25, 35), a means (4, 14, 24, 36) for measuring the particular modes of vibration by said vibrating element (3, 13, 23, 33) which furnishes a signal corresponding to said particular modes of vibration, a device (6, 16, 26) for processing and analyzing said signal which produces at least one element of data corresponding to said signal to characterize the surface condition, and an interface (7, 17, 27) to display said data.

2. An evaluation device according to claim 1, comprising a second processing device for transforming, relative to a predefined scale, said data characterizing said surface condition into a value quantifying the softness to touch of said material (5, 15, 25, 35) as a function of at least one predefined criterion.

3. An evaluation device according to claim 1, in which said material (5, 15, 25, 35) is selected from the group comprising at least materials of the following types : metal, organic, or mineral, of natural, artificial or synthetic origin, and compositions of several of these materials.

4. An evaluation device according to claim 1, in which the vibrating element (3, 13, 23, 33) is made of material selected from the group comprising at least materials of the following types : metal, organic, or mineral of natural, artificial or synthetic origin, and compositions of several of these materials.

5. An evaluation device according to claim 1, in which the vibrating element (3, 13, 23, 33) is made of at least one blade.

6. An evaluation device according to claim 1, in which said means (4, 24, 36) for measuring particular modes of vibration by the vibrating element (3, 23, 33) is a sensor which measures at least one physical value associated with said vibrating element (3, 23, 33).

7. An evaluation device according to claim 6, in which said sensor is an extensometric, piezo-electric or piezo-resistive gauge (4, 24, 36), which is sticked on said vibrating element (3, 23, 33).

8. An evaluation device according to claim 1, in which said means (14) for measuring particular vibration modes by said vibrating element (13) is a sensor which measures at least one value associated with the corresponding environment.

9. An evaluation device according to claims 1, 6 or 8, in which said means (4, 14, 24, 36) for measuring particular modes of vibration by said vibrating element (3, 13, 23, 33) are based on a technology selected from the group comprising at least mechanical, acoustical, electrical, electrostatical, electromagnetic, electronics, optical, optoelectronic, chemical, thermal, or radioactive technology, or a combination of these technologies, using fluid as the media selected from the group comprising at least the viscous, liquid, and gaseous states.

10. An evaluation device according to claim 1, in which said signal processing and analyzing device (6, 16, 26) effects an analysis of said signal using a method selected from the group comprising at least the mathematics and physics methods.

11. An evaluation device according to claim 10, in which in that said method of analysis is a physics method which effects a transformation of said signal selected from the group consisting of at least Fourier transformation, time-frequency transformation, and wave transformation.

12. An evaluation device according to claim 1, in which said vibrating element (3, 13, 23, 33) is attached to said support (2, 12, 22, 32) by one of its extremities which is fitted into.

13. An evaluation device according to any one of the preceding claims, comprising a housing (21) protecting said vibrating element (23) and said support (22), said housing (21) comprising at least one opening (28) for the passage of a portion of a said vibrating element (23).

14. An evaluation device according to claim 13, in which said means (24) for measuring said particular vibration modes, said processing and analysis device (26), and said interface (27) are partially or totally located within said housing (21).

15. A method using the evaluation device according to any one of the preceding claims, in which at least said evaluation device (1, 10, 20, 30) or said material (5, 15, 25, 35) is placed in motion relative to the other so as to cause said vibrating element (3, 13, 23, 33) to rub on the surface of said material (5, 15, 25, 35) so as to cause said vibrating element to enter into its particular modes of vibration, said particular modes of vibration by said vibrating element are measured using said means (4, 14, 24, 36), the resulting signal is processed and analyzed using said processing and analysis device (6, 16, 26) in order to obtain at least one element of data characterizing the surface condition of said material (5, 15, 25, 35).

16. A method according to claim 15, comprising the stage in which said data characterizing the surface condition of said material (5, 15, 25, 35) is transformed, relative to a predefined scale, into at least one value quantifying the softness to touch of said material (5, 15, 25, 35) according to at least one predefined criterion.
